# EUROPÄISCHE PATENTSCHRIFT

(11) **EP 1 727 665 B1**
(45) Veröffentlichungstag und Bekanntmachung des Hinweises auf die Patenterteilung: **24.12.2008**
(21) Anmeldenummer: 05715525.1
(22) Anmeldetag: 25.02.2005
(51) Int. Cl.: B29C 70/50, B29C 70/20

(54) **VERFAHREN UND VORRICHTUNG ZUR KONTINUIERLICHEN HERSTELLUNG VON FASERVERSTÄRKTEN KUNSTSTOFFPLATTEN**
METHOD AND APPARATUS FOR THE CONTINUOUS PRODUCTION OF FIBRE-REINFORCED PLASTIC PLATES
PROCEDE ET DISPOSITIF POUR LA FABRICATION CONTINUE DE PLAQUES EN PLASTIQUE RENFORCEES PAR FIBRES

(30) Priorität: 05.03.2004 EP 04405133
(43) Veröffentlichungstag der Anmeldung: 06.12.2006
(73) Patentinhaber: Alcan Technology & Management Ltd., 8212 Neuhausen am Rheinfall (CH)
(72) Erfinder: BEHRE, Kurt, 49078 Osnabrück (DE)
(86) Internationale Anmeldenummer: PCT/EP2005/001973
(87) Internationale Veröffentlichungsnummer: WO 2005/084926

(56) Entgegenhaltungen:
- GB-A- 2 040 801
- US-A- 4 414 266
- US-A- 4 496 415
- US-A- 4 622 192
- US-A- 5 269 863
- US-B1- 6 369 157

## Beschreibung

Die Erfindung betrifft ein Verfahren zur kontinuierlichen Herstellung von faserverstärkten Kunststoffplatten mit thermoplastischer Matrix nach dem Anspruch 1 und eine Vorrichtung zur Ausführung dieses Verfahrens gemäß Anspruch 20
GB-A-2040801 beschreibt ein Verfahren bzw. eine Vorrichtung gemäß dem Oberbegriff des Anspruchs 1 bzw. 20.

Bis anhin gestaltete es sich schwierig thermoplastische Kunststoffmatrixsysteme in einem kontinuierlichen Verfahren zur Herstellung von faserverstärkten Kunststoffplatten zu verarbeiten. Die Schwierigkeit der Verarbeitung von thermoplastischen Kunststoffmatrixsystemen liegt unter anderem in der Bereitstellung eines geeigneten, reaktiven Ausgangsmaterials, welches nicht nur chemische stabil ist sondern sich auch zur weiteren Verarbeitung in einen niedrig-viskosen Zustand überführen lässt. Überdies sind keine geeigneten Verfahren zur kontinuierlichen Herstellung von Plattenmaterial mit einem thermoplastischen Kunststoffmatrixsystem bekannt.

Somit beschränkte sich bis anhin die Herstellung von faserverstärktem Plattenmaterial mit thermoplastischer Kunststoffmatrix auf diskontinuierliche und entsprechend aufwendige Verfahren.

Aufgabe vorliegender Erfindung ist es, ein kontinuierliches Verfahren zur Herstellung von mit Fasergebilden verstärktem Plattenmaterial mit einer thermoplastischen Kunststoffmatrix vorzuschlagen.

Erfindungsgemäss wird die Aufgabe durch den kennzeichnenden Teil der unabhängigen Ansprüche gelöst. Weiterbildende Ausführungen werden durch die abhängigen Ansprüche beschrieben, welche hiermit Teil der Beschreibung sind.

Die Definitionen der nachfolgenden Begriffe sollen im vorliegendem Text Gültigkeit haben:

Reaktives Ausgangsmaterial umfasst definitionsgemäss unter anderem zyklische bzw. makrozyklische Oligomere des Polyesters, insbesondere des PBT (CPBT genannt), welche mit einem Polymerisations-Katalysator vermengt sind. Ferner umfasst das reaktive Ausgangsmaterial auch Blends (Legierungen) enthaltend die vorgenannten Stoffe, welche bsp. nach Abschluss der Polymerisation ein PBT-Blend (PBT-Kunststofflegierung) ergeben. Reaktive Ausgangsmaterialien der genannten Art zur Herstellung von Polyester bzw. PBT-Kunststoffen sind in der US 6,369,157 näher beschrieben, deren Inhalt hiermit Teil der Offenbarung ist. Ein besonders geeignetes reaktives Ausgangsmaterial mit zyklischen Oligomeren wird unter dem Namen CBT™ (Cyclic Butylene Terephthalate) von der Firma Cyclics bzw. Dow Chemical Company vertrieben.

Der Polymerisations-Katalysator kann bsp. ein Zink-Katalysator oder ein anderer geeigneter Katalysator sein. Das definitionsgemässe reaktive Ausgangsmaterial zeichnet sich insbesondere dadurch aus, dass sich dieses zu seiner Verarbeitung in eine niedrigviskose, Fasergebilde gut durchtränkende Schmelze überführen lässt.

Polyester beinhalten definitionsgemäss unter anderem Kunststoffe wie PET (Polyethylenterephthalat) sowie dazugehörige Kunststoff-Legierungen und insbesondere PBT (Polybutylenterephthalat) oder PBT-Blends, auch PBT-Kunststofflegierungen genannt.

Fasergebilde sind definitionsgemäss flächenförmige Gebilde und umfassen unter anderem textile Flächengebilde, z.B. Vliese, "Non-wovens", nicht-maschenbildende Systeme, wie Gewebe, uni- oder bidirektionale Gelege, Geflechte oder Matten usw. oder z.B. maschenbildende Systeme, wie Gestricke oder Gewirke sowie gestickte Strukturen.

Die Fasern der Fasergebilde beinhalten definitionsgemäss Langfasern mit Faserlängen von z.B. 3-150 mm oder Endlosfasern. Sie sind bsp. in Form von Rovings zu Fasergebilden verarbeitet.

Die Fasern können Glasfasern, Aramidfasern, Kohlenstofffasern, Kunststofffasern, Naturfasern oder Gemische davon sein. Kunststofffasern können insbesondere Polyesterfasern, wie z.B. PET, PBT oder PBT-Blend, sein. Hinsichtlich anorganischer Fasern werden bevorzugt Glasfasern verwendet, da sich diese im Gegensatz zu Aramid- oder Kohlenstofffasern beim Wiederverwerten der faserverstärkten Kunststoffartikel mit relativ wenig Aufwand von der Kunststoffmatrix trennen lassen und Glasfasern ferner verhältnismässig kostengünstig sind.

PBT-Fasern zeichnen sich dadurch aus, dass diese bedingt durch den Herstellungsprozess eine kristalline Ausrichtung in Faserrichtung aufweisen, während die Matrix zwischen den Fasern weitgehend keine kristalline Ausrichtung aufweist, d.h. amorph ist, oder von teilkristalliner Natur ist.

Platte bedeutet definitionsgemäss einen flächigen Körper mit einer gewissen Biegesteifigkeit und einer Dicke, welche im Vergleich zur Längen- und Breitenausdehnung wesentlich kleiner ist. Die mit erfindungsgemässem Verfahren kontinuierlich, d.h. endlos hergestellten Platten weisen bsp. eine Dicke von 1 mm oder grösser, vorzugsweise von 3 mm oder grösser, und insbesondere von 5 mm oder grösser und von 50 mm oder kleiner, vorzugsweise 20 mm oder kleiner, und insbesondere von 10 mm oder kleiner, auf.

Zur Ausführung des Verfahrens wird in einer Faserlegeeinrichtung ein erstes bahnförmiges und vorzugsweise ungefaltetes Fasergebilde in Vorschubrichtung zugeführt. Mittels Faserzufuhreinheiten werden inline ein oder mehrere weitere bahnförmige Fasergebilde über das erste Fasergebilde angeordnet. Vor oder nach wenigstens einer und vorzugsweise mehreren Faserzufuhreinheiten sind Matrixzufuhreinheiten vorgesehen, mittels welchen auf frei liegenden Lagen von Fasergebilden ein Matrixausgangsmaterial zugeführt wird.

Die durch die Faserlegeeinrichtung geführte und fortlaufend mit weiteren Faserlagen und/oder Matrixausgangsmaterial beschichtete Mehrschicht-Faserbahn wird nach Abschluss der Beschichtungen, d.h. nach Austritt aus der Faserlegeeinrichtung, einer Durchlaufpresse zugeführt, in welcher das Matrixausgangsmaterial unter Wärme- und/oder Druckeinwirkung in eine niedrigviskose Flüssigkeit überführt wird und die Mehrschicht-Faserbahn unter Imprägnierung der Fasergebilde in ein plattenförmiges Material verpresst wird.

Die Faserlegeeinrichtung und die Durchlaufpresse sind hierbei inline angeordnet. Inline bedeutet in einer (einzigen) Fertigungslinie angeordnet.

Die Fasergebilde können trocken oder bereits vorimprägniert, insbesondere mit einem Bindemittel vorimprägniert, zugeführt werden. Die Zusammensetzung der Vorimprägnierung entspricht vorzugsweise dem zugeführten Matrixausgangsmaterial.

Das Matrixausgangsmaterial ist vorzugsweise ein reaktives Ausgangsmaterial gemäss Definition. Das reaktive Ausgangsmaterial enthält insbesondere zyklische Oligomere des PBT (CPBT) vermengt mit einem Polymerisationskatalysator oder besteht daraus.

Das Matrixausgangsmaterial wird bsp. in Flüssigform, als Folie oder Film und vorzugsweise in Pulverform auf das oder die Fasergelege appliziert. Wird das Matrixausgangsmaterial in Flüssigform appliziert, so kann dies mittels Sprühen, Streichen, Giessen, Walzen oder Rakeln geschehen. Die Matrixzufuhreinheiten sind entsprechend ausgestattet. Ferner kann das Matrixausgangsmaterial auch durch Imprägnieren der Fasergebilde in einem Durchlauftauchbad aufgebracht werden.

Durch Erwärmen der mit dem Matrixausgangsmaterial beschichteten, insbesondere mit Pulver oder einem Film bzw. Folien beschichteten, Fasergebilde bzw. Fasergelege in der Faserlegevorrichtung, können durch die adhäsiven Eigenschaften des erweichten bzw. angeschmolzenen Ausgangsmaterials die Fasergebilde bzw. deren Fasern miteinander verklebt werden, wobei der Polymerisationsprozess noch nicht zwingend ausgelöst werden muss, jedoch in spezieller Ausführung der Erfindung bereits einsetzen kann.

Die niedrig-viskosen Eigenschaften des verwendeten Matrixausgangsmaterials garantieren eine optimale Durchtränkung bzw. Imprägnierung der Fasern, was insbesondere bei Kunststoffartikeln mit einem hohen Fasergehalt in Form von dichten Fasergebilden von grosser Bedeutung ist. So liegt der Fasergehalt der mit erfindungsgemässem Verfahren hergestellten faserverstärkten Kunststoffplatten vorzugsweise bei mehr als 30 Vol.-% (Volumenprozent), insbesondere bei mehr als 40 Vol.-%, und vorzugsweise bei kleiner 80 Vol.%, insbesondere bei kleiner 70 Vol.% und vorteilhaft bei kleiner 60 Vol.%.

Die Polymerisaton des reaktiven Matrixausgangsmaterial zu einer thermoplastischen Kunststoffmatrix, insbesondere zu einer PBT-Kunststoffmatrix, findet vollständig oder wenigstens zur Hauptsache in der Durchlaufpresse statt.

Gemäss einer ersten spezifischen Ausführungsvariante der Erfindung wird das Matrixausgangsmaterial in Pulverform mittels eines Pulverstreuers auf die Fasergebilde gestreut.

Gemäss einer zweiten spezifischen Ausführungsvariante der Erfindung wird das Matrixausgangsmaterial in Form einer Folie oder eines Films auf die Fasergebilde aufgebracht.

Die Faserlegeeinrichtung enthält vorzugsweise eine oder mehrere inline angeordnete Pressstationen, insbesondere Presseure, mittels welchen die Mehrschicht-Faserbahn inline vorgepresst wird. Die besagten Presseure umfassen eine Andruckrolle und eine Gegendruckrolle, welche paarweise angeordnet sind, und zwischen welchen die Mehrschicht-Faserbahn unter Ausübung eines Pressdruckes durchgeführt wird.

In Weiterbildung der Erfindung ist die Pressstation bzw. der Presseur teil einer Faserzufuhreinheit, wobei die Andruckrolle gleichzeitig als Förderrolle dient über welche ein bahnförmiges Fasergebilde zugeführt bzw. in Vorschubrichtung umgelenkt und auf das Fasergelege appliziert wird. Die Pressstation ist bevorzugt in einer das Fasergebilde ungefaltet in Vorschubrichtung zuführenden Faserzufuhreinheit angeordnet.

Im Verfahren nach der Erfindung ist wenigstens eine Faserzufuhreinheit als Kreuzleger ausgebildet, mittels welchem ein zur Vorschubrichtung der Mehrschicht-Faserbahn schräg oder diagonal zugeführtes bahnförmiges Flächengebilde durch regelmässiges Umlegen desselbigen entlang Legekanten ausbildenden Seitenränder der Mehrschicht-Faserbahn mehrlagig, d.h. insbesondere zweilagig unter gleichzeitigem Vorschub auf die Faserbahn abgelegt wird. Das aufgebrachte Fasergebilde wird bevorzugt in einem Winkel von rund 45° zur Vorschubrichtung des Fasergeleges zugeführt und jeweils in einem Winkel von rund 45° zur Vorschubrichtung des Fasergeleges umgelegt. Die Bahnbreite des schräg zugeführten Fasergebildes entspricht hier der Länge der von einer Legekante zur gegenüberliegenden Legekante ausgebildeten schräg über die Faserbahn führenden Kantenlinie. Ferner entspricht die Bahnbreite des schräg zugeführten Fasergebildes dem Produkt: b * √2 (Wurzel aus 2), wobei b der Breite der (Mehrschicht-) Faserbahn entspricht.

Es können jedoch auch andere Zufuhr- und Umlegwinkel sowie andere Bahnbreiten gewählt werden. Die Faserzufuhreinheit mit Kreuzleger soll hierzu das Einstellen eines Zufuhr- und Umlegwinkels erlauben.

Das Fasergebilde wird mittels Umlenkungen im Kreuzleger in einer wechselnden Seitwärtsbewegung, d.h. einer hin und her Bewegung bezogen auf die Vorschubrichtung, überkreuzend aufgebracht. Ferner kann das Fasergebilde mittels Umlenkungen im Kreuzleger in wickelartiger Drehbewegung überkreuzend aufgebracht werden. Die mehrschichtig, überkreuzend aufgebrachten Fasergebilde können fallweise in nachgeordneten Stationen mittels Hilfsmittel wie Fasern, Nadeln oder Fäden gegeneinander bzw. an andere Fasergebilde fixiert werden.

Enthalten die Fasergebilde bsp. gerichtete Fasern, insbesondere in eine oder zwei Richtungen gerichtete Fasern, wie dies bei Geweben üblich ist, so wird durch das abschnittsweise Umlegen der Fasergebilde die Faserrichtung in der Faserbahn kontinuierlich geändert, wodurch die mechanischen Werte in mehrere Richtungen betont werden.

In Weiterbildung der Erfindung wird abwechslungsweise ein bahnförmiges, ungefaltetes Fasergebilde in Vorschubrichtung des Fasergeleges und ein nachfolgendes bahnförmiges Fasergebilde schräg oder diagonal zur Vorschubrichtung des Fasergeleges kreuzweise gefaltet zugeführt wird. Das, eine erste abschliessende Faserdeckschicht der Mehrschicht-Faserbahn ausbildende Fasergebilde sowie das die zweite abschliessende Faserdeckschicht der Mehrschicht-Faserbahn ausbildende Fasergebilde ist vorzugsweise ungefaltet und in Vorschubrichtung der Mehrschicht-Faserbahn zugeführt. Die beiden Fasergebilde werden entsprechend mit der ersten und letzten Faserzufuhreinheit der Faserlegeeinrichtung zugeführt.

Zwecks Zufuhr von Matrixausgangsmaterial ist bevorzugt wenigstens jeweils im Anschluss an eine Faserzufuhreinheit mit Kreuzleger eine Matrixzufuhreinheit, insbesondere ein Pulverstreuer, angeordnet. Es kann jedoch auch jeder Faserzufuhreinheit jeweils eine Matrixzufuhreinheit, insbesondere eine Pulverstreuer, nachgeordnet sein. In bevorzugter Ausführung der Erfindung ist insbesondere zwischen der letzten Faserzufuhreinheit und der Durchlaufpresse eine letzte Matrixzufuhreinheit, insbesondere ein Pulverstreuer, angeordnet.

Die Anzahl der Faserlagen und die Menge des eingebrachten Matrixausgangsmaterials bestimmt die erzielbare Dicke der Mehrschicht-Faserbahn und somit des zu fertigenden Plattenmaterials sowie dessen Fasergehalt. Die einzelnen eingebrachten Fasergebilde können eine voneinander abweichende Struktur aufweisen. So können bsp. wechselnde Lagen von Faservliesen und Fasergeweben vorgesehen sein.

Die Mehrschicht-Faserbahn wird in einer bevorzugten Ausführung der Erfindung nach Zufuhr sämtlicher Fasergebilde sowie sämtlichen Matrixausgangsmaterials und vor Eintritt in die Durchlaufpresse mittels einer Folienzufuhreinrichtung ein- oder beidseitig mit einer Deckschicht in Form einer Kunststofffolie oder eines extrudierten Kunststofffilms beschichtet. Die Deckschicht verbindet sich dabei in der nachgeordneten Durchlaufpresse mit der polymerisierenden Kunststoffmatrix der Mehrschicht-Faserbahn. Die Deckschicht wird folglich integraler Bestandteil des herzustellenden, faserverstärkten Plattenmaterials.

Die Deckschicht ist bevorzugt aus einem polymerisierten, thermoplastischen Kunststoff, vorzugsweise aus einem (polymerisierten) Polyester, wie PET, insbesondere aus einem PBT oder einer PBT-Kunststofflegierung. Die Deckschichten und die Kunststoffmatrix der Mehrschicht-Faserbahn können in polymerisiertem Zustand aus demselben Kunststoff bzw. aus einander nahestehenden Kunststofflegierungen bestehen.

Die auf die Faserbahn aufgebrachte Deckschicht kann auch ein faserverstärktes, bahnförmiges Kunststoffmaterial mit einer äusseren, frei liegenden und faserfreien (polymerisierten) Kunststoffschicht der oben genannten Zusammensetzung sein.

Die genannte Deckschicht weist bsp. eine Dicke von grösser Dicke 50 µm, insbesondere von grösser 100 µm und von kleiner 2000 µm, insbesondere von kleiner 1000 µm auf.

Dank den klebrigen Eigenschaften des reaktiven Ausgangsmaterials bleibt der Kunststoff-Film bevorzugt auf der imprägnierten bzw. beschichteten Mehrschicht-Faserbahn haften.

Der Schmelz- oder Zersetzungspunkt der Deckschichten liegt hierbei höher als die Polymerisationstemperatur des reaktiven Ausgangsmaterials. Somit wird die Deckschicht während des Polymerisationsvorgangs der Kunststoffmatrix nicht beeinträchtigt.

Da der Schmelzpunkt des bereits polymerisierten PBT-Deckschicht (ca. 220°C) höher ist als die Polymerisationstemperatur des eingesetzten reaktiven Ausgangsmaterials (ca. 180-190°C) wird die Deckschicht aus PBT durch die Wärmeeinwirkung beim Polymerisieren der Kunststoffmatrix nicht nachteilig beeinträchtigt.

Die integrale Applikation der genannten Deckschichten hat den Vorteil, dass eine hohe Oberflächengüte des Plattenmaterials erreicht wird, da die Deckschichten keine Fasern enthalten. Ferner wirken die Deckschichten gleichzeitig als Release-Layer (Trennschichten), welche das Verkleben der imprägnierten Mehrschicht-Faserbahn mit den berührenden Vorrichtungsteilen, wie Walzen oder Pressplatten, bzw. deren Verschmutzung verhindert.

In Ausführung der Erfindung können die Deckschichten eingefärbt sein und so dem Plattenmaterial bereits das äussere, farbliche Erscheinungsbild geben. Die Einfärbung kann derart sein, dass die unter den Deckschichten angeordneten faserverstärkten Schichten nicht mehr sichtbar sind. Dadurch kann gegebenenfalls ein nachfolgender Farblackierungsschritt eingespart werden.

Die in Form eines Materialverbundes vorliegende Mehrschicht-Faserbahn wird in der Durchlaufpresse unter Zufuhr von Wärme und/oder Druck unter Polymerisation der Kunststoffmatrix zu einem Polyester, insbesondere zu einem PBT innig, und vorzugsweise porenfrei zu einem plattenförmigen Material geformt.

Die Mehrschicht-Faserbahn wird in der Durchlaufpresse vorzugsweise durch mehrere, separat justierbare Presszonen und Temperierzonen geführt, wobei die Pressdrücke durch schwimmende, hydraulisch betätigte untere Pressplatten, welche gegen eine obere starre Pressenkonstruktion arbeiten, erzeugt werden. Der Druck in der Durchlaufpresse wird insbesondere über segmentierte Pressenplatten mit zueinander einstellbaren Spaltabständen aufgebaut. Durch die Spaltöffnungen zwischen benachbarten Pressensegmenten wird ein Verschwimmen der Faserbahn verhindert.

In bevorzugter Ausführung ist nach einer bestimmten Anzahl segmentierter Pressenplatten jeweils eine zusätzliche Pressstation, insbesondere ein Presseur angeordnet, welcher einen Liniendruck auf das imprägnierte Fasergelege ausübt. Durch das Ausüben eines Liniendruckes werden allfällig vorhandene Lunker und Blasen in der Kunststoffmatrix ausgetrieben. Die Durchlaufpresse kann einen oder mehrere den Pressenplatten nachgeordnete Pressstationen, insbesondere Presseure, aufweisen, so dass das Fasergelege eine vollständige und blasenfreie Durchtränkung der Fasergebilde mit der schmelzflüssigen Kunststoffmatrix erfährt.

Der Vorschub des Fasergeleges bzw. des Plattenmaterial in der Durchlaufpresse geschieht bevorzugt mittels einer Doppelbandanlage.

Das fertige Plattenmaterial kann nach Verlassen der Durchlaufpresse auf einem Rollenförderer einer Schneid- oder Sägevorrichtung zugeführt und längs und/oder quer zur Durchlaufrichtung bzw. Vorschubrichtung zu einzelnen Platten oder Streifen geschnitten bzw. abgelängt und batch-weise gestapelt werden.

Die Vorrichtung zur Ausführung des erfindungsgemässen Verfahrens enthält gemäß Anspruch 20 eine Faserlegeeinrichtung und eine inline daran anschliessende Durchlaufpresse. Die Faserlegeeinrichtung enthält mehrere Faserzufuhreinheiten zur Inline-Zuführung von bahnförmigen Fasergebilden sowie eine oder mehrere den Faserzufuhreinheiten zwischen- oder nachgeschaltete Matrixzufuhreinheiten zur Zufuhr eines Matrixausgangsmaterial auf frei liegenden Lagen von Fasergebilden. Wenigstens eine Faserzufuhreinheit ist als Kreuzleger ausgebildet, mittels welchem ein in Vorschubrichtung der Mehrschicht-Faserbahn schräg oder diagonal zuführ- und unter Ausbildung von Legekanten umlegbar ist.

Die Matrixzufuhreinheit ist bsp. ein Pulverstreuer, mittels welchem das in Pulverform vorliegende Matrixausgangsmaterial jeweils auf eine Lage eines frei liegenden Fasergebildes gestreut wird. Die Matrixzufuhreinheit kann auch eine Folienzufuhreinrichtung sein, mittels welcher ein folienförmiges Matrixausgangsmaterial auf jeweils eine frei liegende Lage eines Fasergebildes aufgebracht wird.

Die Faserlegeeinrichtung enthält bevorzugt eine oder mehrere Pressstationen, insbesondere Presseure, mittels welchen das mehrschichtige, bahnförmige Fasergelege inline vorgepresst werden kann. Die Pressstation enthält bevorzugt eine Andrückrolle und Gegendruckrolle, welche paarweise angeordnet sind, und zwischen welchen das bahnförmige Fasergelege durchgeführt wird. Die Pressstation ist bevorzugt teil einer Faserzufuhreinheit, insbesondere zur Zufuhr des Fasergebildes in Vorschubrichtung, wobei die Andrückrolle gleichzeitig als Förderrolle zur Zufuhr des bahnförmigen Fasergebildes dient.

In bevorzugter Ausführung der Erfindung weist die Faserlegeeinrichtung abwechslungsweise eine Faserzufuhreinheit zur Zuführung des bahnförmigen Fasergebildes in Vorschubrichtung des Fasergeleges und eine nachfolgende Faserzufuhreinheit mit Kreuzleger auf.

Vorzugsweise wenigstens im Anschluss an eine Faserzufuhreinheit mit Kreuzleger sind Matrixzufuhreinheiten angeordnet. Die Matrixzufuhreinheiten können auch nach jeder Faserzufuhreinheit angeordnet sein.

Die Durchlaufpresse enthält bevorzugt mehrere, separat justierbare Presszonen und Temperierzonen, wobei die Presszonen zur Ausübung des Pressdruckes schwimmende, hydraulisch betätigte untere Pressplatten, welche gegen eine obere starre Pressenkonstruktion arbeiten, enthalten. Die Presszonen weisen insbesondere eine Mehrzahl von segmentierten Pressenplatten mit zueinander einstellbaren Spaltabständen auf. Die Spaltöffnungen bilden bsp. einen Luftspalt von 1 bis 10 mm, insbesondere von 3 bis 5 mm aus.

In Weiterführung der Erfindung ist nach einer bestimmten Anzahl segmentierter Pressenplatten jeweils eine Pressstation, bevorzugt Ausführung eines Presseurs, zur Erzeugung eines Liniendrucks angeordnet. Die Durchlaufpresse kann einen oder mehrere solcher Pressstationen enthalten.

Die Durchlaufpresse wird bevorzugt mittels einer Doppelbandanlage betrieben. Die dazugehörigen Bänder können bsp. PTFE-(Polytetrafluorethylen)-Bänder oder Stahlbänder sein. Diese Konstruktion erlaubt in Abhängigkeit von der Länge der Heizstrecke mittlere bis hohe Durchsätze.

Das erfindungsgemässe Verfahren erlaubt die kontinuierliche Herstellung von faserverstärktem endlos-Plattenmaterial mit thermoplastischer Kunststoffmatrix, welches einen vollautomatisierten Herstellungsbetrieb von der Zufuhr der Fasergebilde und des Matrixausgangsmaterials bis zum Ablängen des fertigen Plattenmaterials nach Austritt aus der Durchlaufpressen ermöglicht.

Das erfindungsgemässe faserverstärkte Plattenmaterial findet Verwendung als flache Platten bzw. Streifenware. Ferner kann das Plattenmaterial zu thermisch umgeformten, dreidimensionalen Artikeln, bsp. mittels thermischen Tiefziehen, weiterverarbeitet werden. Weiters kann das besagte Plattenmaterial in Form flacher Platten zu mehrschichtigen, d.h. weitere Schichten enthaltende Verbunde, insbesondere zu Sandwichverbunde, weiterverarbeitet werden, wobei die weiteren Schichten bsp. Schaumstoffe, Metallfolien oder Metallplatten umfassen können.

Das besagte Plattenmaterial oder die daraus hergestellten Verbundplatten oder thermogeformten Artikel finden Verwendung im Transportwesen, wie Strassenfahrzeugbau (Automobile, Busse, Lastkraftwagen, Leichtfahrzeugen etc.), Schienenfahrzeugbau (Eisenbahn, Tram, Schnellbahn, Magnetschwebebahnen), Luftfahrt (Flugzeugbau, Raumfahrt), Schiff- und Bootsbau oder Seilbahnen. Ferner findet das besagte Plattenmaterial Verwendung im Hochbau und Tiefbau, Innenausbau und insbesondere in der Gebäudetechnik sowie in der Herstellung von Sportgeräten.

Aus dem erfindungsgemässen Plattenmaterial können bsp. Karosserieverkleidungen, Unterbodenwannen, Strukturprofile, Leisten etc. Verkleidungselemente, Blenden etc., hergestellt werden.

Im folgenden wird die Erfindung beispielhaft und mit Bezug auf die beiliegenden Zeichnungen näher erläutert. Es zeigen:
- Fig. 1 a,b:: eine Vorrichtung zur Ausführung des erfindungsgemässen Verfahrens;
- Fig. 2:: beispielhafte Anordnung der Fasergebilde nach erfindungsgemässem Verfahren;
- Fig. 3:: beispielhafte Anordnung des Pulverstreuers innerhalb der Vorrichtung;
- Fig. 4:: einen Querschnitt durch A - A gemäss Fig. 3 mit beispielhafter Anordnung der Fasergebilde.

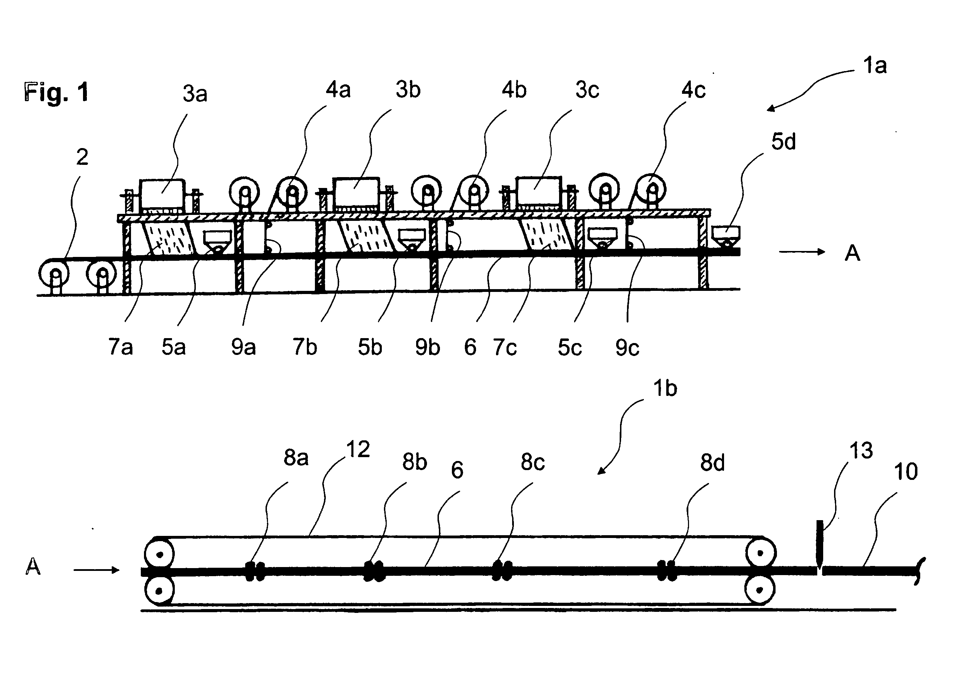

Fig. 1 zeigt eine Vorrichtung 1a, 1b zur kontinuierlichen Herstellung eines faserverstärkten Plattenmaterials. Ein erstes bahnförmiges Fasergebilde 2 wird in Vorschubrichtung ungefaltet der Vorrichtung 1a zugeführt. Über das Fasergebilde 2 wird mittels eines Kreuzlegers 3a ein weiteres Fasergebilde 7a schräg/diagonal kreuzweise von Legekante zu Legekante aufgebracht. Mittels Pulverstreuer 5a wird inline kontinuierlich pulverförmiges Matrixausgangsmaterial gleichmässig auf die frei liegende Oberfläche der Faserbahn 6 aufgebracht. Über die mit dem Matrixausgangsmaterial beschichtete Faserbahn 6 wird über eine Faserzufuhreinheit 4a in Vorschubrichtung ein weiteres bahnförmiges Fasergebilde 9a ungefaltet zugeführt und über das kreuzweise angeordnete Fasergebilde 7a gelegt. Das bahnförmige Fasergebilde 9a wird über einen Presseur auf die Mehrschicht-Faserbahn 6 gepresst und verbindet sich mit dem darunterliegenden pulverbeschichteten Fasergebilde 7a. Über einen weiteren Kreuzleger 3b wird ein weiteres bahnförmiges Fasergebilde 7b schräg/diagonal kreuzweise von Legekante zu Legekante auf die Mehrschicht-Faserbahn 6 aufgebracht und mittels Pulverstreuer 5b wiederum mit pulverförmigem Matrixausgangsmaterial beschichtet. Über das mit dem Matrixausgangsmaterial beschichtete Fasergebilde 7b wird über eine Faserzufuhreinheit 4b in Vorschubrichtung ein weiteres bahnförmiges Fasergebilde 9b ungefaltet zugeführt und über das kreuzweise angeordnete Fasergebilde 7b gelegt. Das bahnförmige Fasergebilde 9b wird wiederum über einen Presseur auf die Mehrschicht-Faserbahn 6 gepresst und verbindet sich mit dem darunterliegenden pulverbeschichteten Fasergebilde 7b.

Über einen weiteren Kreuzleger 3c wird erneut ein bahnförmiges Fasergebilde 7c schräg/diagonal kreuzweise von Legekante zu Legekante auf die Mehrschicht-Faserbahn 6 aufgebracht und mittels Pulverstreuer 5c wiederum mit pulverförmigem Matrixausgangsmaterial beschichtet. Über das mit dem Matrixausgangsmaterial beschichtete Fasergebilde 7c wird über eine Faserzufuhreinheit 4c in Vorschubrichtung ein abschliessendes, bahnförmiges Fasergebilde 9c ungefaltet zugeführt und über das kreuzweise angeordnete Fasergebilde 7c gelegt. Das bahnförmige Fasergebilde 9c wird auch hier über einen Presseur auf das Fasergelege 6 gepresst und verbindet sich mit dem darunterliegenden pulverbeschichteten Fasergebilde 7c. Vor Eintritt in die Durchlaufpresse ist ein letzter Pulverstreuer 5d vorgesehen, welcher die freie Oberfläche der Mehrschicht-Faserbahn 6 mit pulverförmigem Matrixausgangsmaterial beschichtet.

Das mit Matrixausgangsmaterial beschichtete Fasergelege 6 wird inline (siehe Fortsetzungspfeil A) einer Durchlaufpresse 1b zugeführt, in welcher die kontinuierlich zugeführte Mehrschicht-Faserbahn in mehreren Presszonen mit segmentierten Pressenplatten zu einem Plattenmaterial verpresst wird. Zwischen den Pressenplatten sind jeweils Presseure 8a,b, c zur Erzeugung eines Liniendrucks angeordnet.

Der Vorschub des Fasergeleges in der Druchlaufpresse wird hierbei von einer Doppelbandfördereinheit 12 gewährleistet. Bei Austritt des Plattenmaterials aus der Durchlaufpresse wird dieses mittels Schneid- oder Sägevorrichtung 13 in einzelne Platten 10 abgelängt.

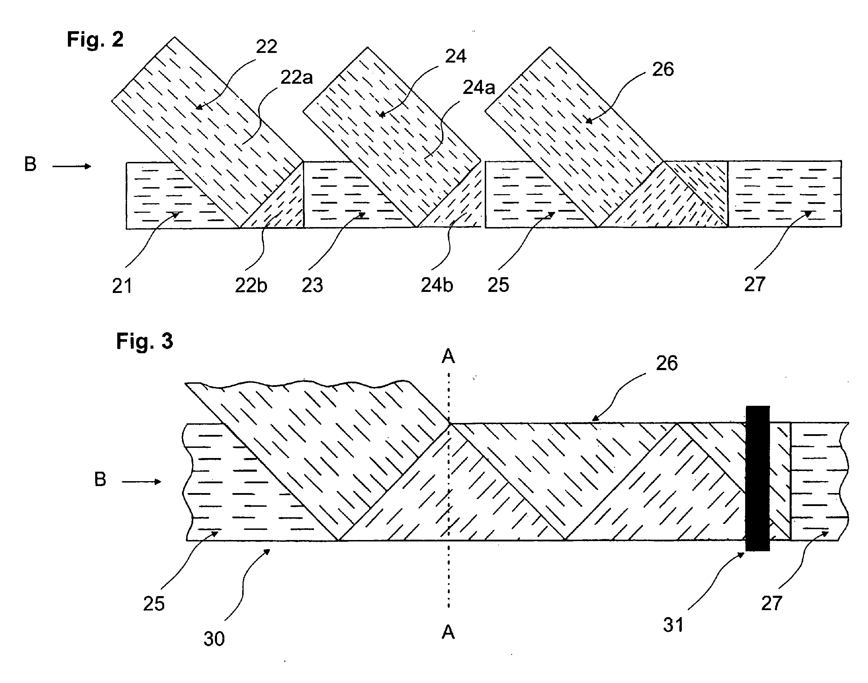

Figur 2 zeigt einen möglichen Aufbau eines mittels erfindungsgemässem Verfahren hergestellten Plattenmaterials. Pfeil B zeigt die Vorschubrichtung der Mehrschicht-Faserbahn in der Vorrichtung auf.

Das Fasergelege enthält ein erstes Fasergebilde 21, welches als erstes ungefaltet in Vorschubrichtung der Vorrichtung zugeführt wurde. Das zweite Fasergebilde 22 ist mittels Kreuzleger in einem 45° Winkel zur Vorschubrichtung schräg/diagonal gekreuzt auf das erste Fasergebilde 21 gelegt worden und bildet jeweils eine obere Faserschicht 22b und eine darunterliegende Faserschicht 22a aus. über dem gefaltet aufgebrachten Fasergelege 22 liegt wiederum ein ungefaltetes in Vorschubrichtung zugeführtes, ungefaltetes Fasergebilde 23.

Die nächste Lage ist wiederum ein mittels Kreuzleger in einem 45° Winkel zur Vorschubrichtung schräg/diagonal gekreuzt aufgebrachtes Fasergebilde 24 mit einer oberen Faserschicht 24b und einer darunter liegenden Faserschicht 24a. Über diese Faserlagen sind analog zum vorgenannten Lagenmuster Fasergebilde 25 und 26 sowie eine abschliessende ebenfalls in Vorschubrichtung zugeführte, ungefaltete Faserlage 27 aufgebracht.

Fig. 3 zeigt einen Ausschnitt aus einer Mehrschicht-Faserbahn 30 mit einem unteren und oberen ungefalteten Fasergebilde 25, 27 sowie einem zwischen diesen beiden Fasergebilden angeordneten, mittels Kreuzleger aufgebrachten Fasergebilde 26. Ein Pulverstreuer 31 ist über dem kreuzweise aufgebrachten Fasergebilde 26 aufgebracht und beschichtet dieses mit pulverförmigem Matrixausgangsmaterial. Daran anschliessend ist die nächste ungefaltete Faserlage 27 aufgetragen.

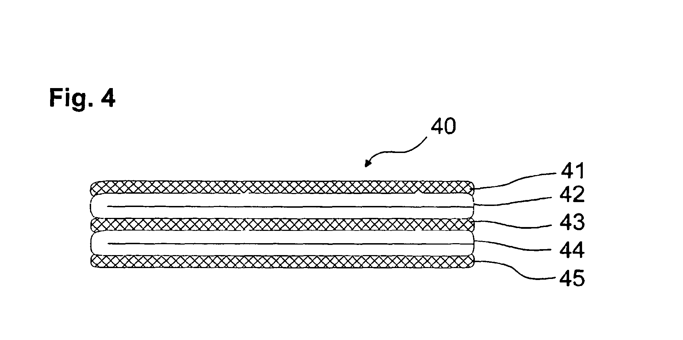

Fig. 4 zeigt einen schematischen Querschnitt A - A durch ein Fasergelege gemäss Fig. 3 mit wechselseitiger Schichtung von kreuzweise, entsprechend zweischichtig applizierten Fasergebilden 42, 44 sowie dazwischen liegenden ungefalteten, in Vorschubrichtung aufgebrachten Fasergebilden 41, 43, 45.

## Patentansprüche

1. Verfahren zur kontinuierlichen Herstellung eines mit flächenförmigen Fasergebilden verstärkten, thermoplastischen Plattenmaterials, bei welchem Verfahren einer Faserlegeeinrichtung ein erstes bahnförmiges Fasergebilde zugeführt wird, mittels Faserzufuhreinheiten inline ein oder mehrere weitere bahnförmige Fasergebilde über das erste Fasergebilde angeordnet werden, mittels einer oder mehreren den Faserzufuhreinheiten vor oder nachgeschalteten Matrixzufuhreinheiten auf frei liegende Lagen von Fasergebilden ein Matrixausgangsmaterial zugeführt wird, und die aus der Faserlegeeinrichtung austretende, mehrlagige, ein- oder mehrfach mit Zwischenlagen aus Matrixausgangsmaterial beschichtete Mehrschichtfaserbahn einer Durchlaufpresse zugeführt wird, in welcher das Matrixausgangsmaterial unter Wärme und/oder Druckeinwirkung in eine niedrig-viskose Flüssigkeit überführt und die Mehrschicht-Faserbahn unter Imprägnierung der Fasergebilde in ein plattenförmiges Kunststoffmaterial verpresst wird,
**dadurch gekennzeichnet, dass**
wenigstens eine Faserzufuhreinheit als Kreuzleger ausgebildet ist, mittels welchem ein in Vorschubrichtung der Faserbahn schräg oder diagonal zugeführtes bahnförmiges Flächengebilde durch regelmässiges Umlegen desselbigen entlang der Seitenränder der Faserbahn auf die Faserbahn appliziert wird.

2. Verfahren nach Anspruch 1, **dadurch gekennzeichnet, dass** das bahnförmige Flächengebilde in einem Winkel von 45° zur Vorschubrichtung der Faserbahn zugeführt und umgelegt wird.

3. Verfahren nach Anspruch 1 oder 2, **dadurch gekennzeichnet, dass** abwechslungsweise ein bahnförmiges Fasergebilde ungefaltet in Vorschubrichtung der Faserbahn und ein nachfolgendes bahnförmiges Fasergebilde mittels Kreuzteger schräg oder diagonal zur Vorschubrichtung der Faserbahn überkreuzend zugeführt wird, wobei das erste und letzte zugeführte Fasergebilde vorzugsweise ungefaltet in Vorschubrichtung der Faserbahn zugeführt werden.

4. Verfahren nach einem der Ansprüche 1 bis 3, **dadurch gekennzeichnet, dass** die Matrixzufuhreinheiten jeweils im Anschluss an eine Faserzufuhreinheit mit Kreuzleger angeordnet sind.

5. Verfahren nach einem der Ansprüche 1 bis 4, **dadurch gekennzeichnet, dass** das Matrixausgangsmaterial ein reaktives Ausgangsmaterial enthaltend zyklische oder makrozyklische Oligomere des Polyesters vermengt mit einem Polymerisationskatalysator, und insbesondere ein reaktives Ausgangsmaterial enthaltend zyklische Oligomere des PBT (CPBT) vermengt mit einem Polymerisationskatalysator, ist.

6. Verfahren nach einem der Ansprüche 1 bis 5, **dadurch gekennzeichnet, dass** die Matrixzufuhreinheiten Pulverstreuer sind, mittels welchem das in Pulverform vorliegende Matrixausgangsmaterial jeweils auf eine Lage eines frei liegenden Fasergebildes gestreut wird.

7. Verfahren nach einem der Ansprüche 1 bis 6, **dadurch gekennzeichnet, dass** mittels Matrixzufuhreinheiten ein folienförmiges Matrixausgangsmaferial auf jeweils eine frei liegende Lage eines Fasergebildes aufgebracht wird.

8. Verfahren nach einem der Ansprüche 1 bis 7, **dadurch gekennzeichnet, dass** das reaktive Ausgangsmaterial in der Durchlaufpresse zu einer thermoplastischen Kunststoffmatrix, insbesondere zu einer PBT Kunststoffmatrix polymerisiert wird.

9. Verfahren nach einem der Ansprüche 1 bis 8, **dadurch gekennzeichnet, dass** die Faserlegeeinrichtung eine oder mehrere Pressstationen, insbesondere Presseure, enthält, mittels welchen die Mehrschicht-Faserbahn inline vorgepresst wird.

10. Verfahren nach einem der Ansprüche 1 bis 9, **dadurch gekennzeichnet, dass** die Pressstation eine Andruck- und Gegendruckrolle, umfasst, welche paarweise angeordnet sind, und zwischen welchen das bahnförmige Fasergelege unter Ausübung eines Pressvorganges durchgeführt wird.

11. Verfahren nach Anspruch 10, **dadurch gekennzeichnet, dass** die Pressstation teil einer Faserzufuhreinheit ist, wobei über die Andruckrolle gleichzeitig ein bahnförmiges Fasergebilde zugeführt, umgelenkt und auf die Faserbahn appliziert wird.

12. Verfahren nach einem der Ansprüche 1 bis 11, **dadurch gekennzeichnet, dass** die in Vorschubrichtung des Fasergeleges über eine Faserzufuhreinheit zugeführten weiteren Fasergebilde über eine Pressstation, insbesondere über eine Andrückrolle auf die Mehrschicht-Faserbahn appliziert werden.

13. Verfahren nach einem der Ansprüche 1 bis 12, **dadurch gekennzeichnet, dass** die Mehrschicht-Faserbahn nach Zufuhr sämtlicher Fasergebilde und sämtlichem Matrixausgangsmaterials und vor Eintritt in die Durchlaufpresse ein- oder beidseitig mit einer Deckschicht in Form einer Kunststoff-Folie oder einem extrudierten Kunststoff-Film beschichtet wird, wobei sich die Deckschicht in der Durchlaufpresse mit der Kunststoffmatrix der Mehrschicht-Faserbahn verbindet

14. Verfahren nach einem der Ansprüche 1 bis 13, **dadurch gekennzeichnet, dass** die Deckschicht aus einem thermoplastischen Kunststoff, vorzugsweise aus einem Polyester, wie PET, insbesondere aus einem PBT oder einer PBT-Kunststofflegierung ist

15. Verfahren nach einem der Ansprüche 1 bis 14, **dadurch gekennzeichnet, dass** die in Form eines Materialverbundes vorliegende Mehrschicht-Faserbahn in der Durchlaufpresse unter Zufuhr von Wärme und/oder Druck und unter Polymerisation der Kunststoffmatrix zu einem thermoplastischen Kunststoff innig und porenfrei zu einem plattenförmigen Kunststoffmaterial verbunden wird.

16. Verfahren nach einem der Ansprüche 1 bis 15, **dadurch gekennzeichnet, dass** die Mehrschicht-Faserbahn durch eine Durchlaufpresse mit mehreren, separat justierbaren Presszonen und Temperierzonen geführt wird, und die Pressdrücke durch schwimmende, hydraulisch betätigte untere Pressplatten, welche gegen eine obere starre Pressenkonstruktion arbeiten, erzeugt werden.

17. Verfahren nach einem der Ansprüche 1 bis 17, **dadurch gekennzeichnet, dass** der Druck in der Durchlaufpresse durch segmentierte Pressenplatten mit zueinander einstellbaren Spaltabständen aufgebaut wird.

18. Verfahren nach einem der Ansprüche 1 bis 17, **dadurch gekennzeichnet, dass** nach einer bestimmten Anzahl segmentierter Pressenplatten jeweils mittels eines Presseurs ein Liniendruck zum Austreiben von Lunkern und Blasen aus der Kunststoffmatrix erzeugt wird.

19. Verfahren nach einem der Ansprüche 1 bis 18, **dadurch gekennzeichnet, dass** die Mehrschicht-Faserbahn durch einen oder mehrere in der Durchlaufpresse angeordnete Presseure geführt wird, wodurch die Mehrschicht-Faserbahn eine vollständige, blasenfreie Durchtränkung der Fasergebilde mit der schmelzflüssigen Kunststoffmatrix erfährt.

20. Vorrichtung zur Ausführung des Verfahrens nach Anspruch 1, wobei die Vorrichtung eine Faserlegeeinrichtung und eine inline daran anschliessende Durchlaufpresse enthält, und die Faserlegeeinrichtung mehrere Faserzufuhreinheiten zur Inline-Zuführung von bahnförmigen Fasergebilden sowie eine oder mehrere den Faserzufuhreinheiten zwischen- oder nachgeschaltete Matrixzufuhreinheiten zur Zufuhr eines Matrixausgangsmaterial auf frei liegende Lagen der Fasergebilde, enthält,
**dadurch gekennzeichnet, dass**
wenigstens eine Faserzufuhreinheit als Kreuzleger ausgebildet ist, mittels welchem ein in Vorschubrichtung der Mehrschicht-Faserbahn schräg oder diagonal zuführ- und unter Ausbildung von Legekanten umlegbar ist.

21. Vorrichtung nach Anspruch 20, **dadurch gekennzeichnet, dass** abwechslungsweise eine Faserzufuhreinheit zur ungefalteten Zuführung eines bahnförmigen Fasergebildes in Vorschubrichtung der Faserbahn und eine nachfolgende Faserzufuhreinheit mit Kreuzleger zur Zuführung eines bahnförmigen Fasergebildes schräg oder diagonal zur Vorschubrichtung der Faserbahn, wobei die erste und letzte Faserzufuhreinheit zur ungefalteten Zuführung eines bahnförmigen Fasergebildes in Vorschubrichtung der Faserbahn ist.

22. Vorrichtung nach Anspruch 20 oder 21, **dadurch gekennzeichnet, dass** im Anschluss an eine Faserzufuhreinheit mit Kreuzleger jeweils eine Matrixzufuhreinheit angeordnet ist.

23. Vorrichtung nach Anspruch 22, **dadurch gekennzeichnet, dass** die Matrixzufuhreinheit ein Pulverstreuer ist, mittels welchem ein in Pulverform vorliegendes Matrixausgangsmaterial auf frei liegende Lagen der Fasergebilde gestreut wird.

24. Vorrichtung nach Anspruch 22, **dadurch gekennzeichnet, dass** die Matrixzufuhreinheit eine Folienzufuhreinheit ist, mittels welcher ein folienförmiges Matrixausgangsmaterial auf jeweils frei liegende Lagen der Fasergebilde aufgebracht wird.

25. Vorrichtung nach einem der Ansprüche 20 bis 24, **dadurch gekennzeichnet, dass** die Faserlegeeinrichtung eine oder mehrere Pressstationen, insbesondere Presseure, enthält mittels welchen die Mehrschicht-Faserbahn inline vorgepresst wird.

26. Vorrichtung nach einem der Ansprüche 20 bis 25, **dadurch gekennzeichnet, dass** die Pressstation eine Andruck- und Gegendruckrolle umfasst, welche paarweise angeordnet sind, und zwischen welchen die Mehrschicht-Faserbahn unter Ausübung eines Pressdruckes durchgeführt wird.

27. Vorrichtung nacht einem der Ansprüche 20 bis 26, **dadurch gekennzeichnet, dass** die Pressstation teil einer Faserzufuhreinheit ist, und die Andruckrolle gleichzeitig der ungefalteten Zufuhr und Umlenkung eines bahnförmigen Fasergebildes in Vorschubrichtung dient

28. Vorrichtung nach einem der Ansprüche 20 bis 27, **dadurch gekennzeichnet, dass** die Durchlaufpresse mehrere, separat justierbare Presszonen und Temperierzonen enthält, und die Presszonen zur Ausübung des Pressdruckes schwimmende, hydraulisch betätigte untere Pressplatten, welche gegen eine obere starre Pressenkonstruktion arbeiten, enthalten.

29. Vorrichtung nach einem der Ansprüche 20 bis 28, **dadurch gekennzeichnet, dass** die Presszonen segmentierte Pressenplatten mit zueinander einstellbaren Spaltabständen aufweisen.

30. Vorrichtung nach einem der Ansprüche 20 bis 29, **dadurch gekennzeichnet, dass** nach einer bestimmten Anzahl segmentierter Pressenplatten jeweils eine Pressstation, insbesondere ein Presseur, zur Erzeugung eines Liniendrucks angeordnet ist.

## Claims

1. Process for continuous production of a thermoplastic panel material reinforced by laminar fibre structures, in which process a first web-like fibre structure is supplied to a fibre-laying device, by means of fibre-supply units in-line, one or more further web-like fibre structures are arranged above the first fibre structure, by means of one or more matrix-supply units arranged upstream or downstream of the fibre-supply units, a matrix starting material is supplied to free-lying layers of fibre structures, and the multi-ply multi-layer fibre web emerging from the fibre-laying device and coated once or several times with intermediate layers of matrix starting material is supplied to a continuous press, in which the matrix starting material is converted under action of heat and/or pressure into a low-viscosity liquid and the multi-layer fibre web is pressed into a panel-like plastic material with impregnation of the fibre structure, **characterised in that** at least one fibre-supply unit is designed as a cross layer, by means of which a web-like laminar structure supplied obliquely or diagonally in advance direction of the fibre web is applied to the fibre web by regular folding of the same along the side edges of the fibre web.

2. Process according to claim 1, **characterised in that** the web-like laminar structure is supplied and folded at an angle of 45° to the advance direction of the fibre web.

3. Process according to claim 1 or 2, **characterised in that** alternatively, a web-like fibre structure is supplied unfolded in advance direction of the fibre web and a subsequent web-like fibre structure is supplied crossing over by means of a cross layer obliquely or diagonally to the advance direction of the fibre web, wherein the first and last fibre structure supplied are preferably supplied unfolded in advance direction of the fibre web.

4. Process according to one of claims 1 to 3, **characterised in that** the matrix-supply units are arranged in each case following a fibre-supply unit with cross layer.

5. Process according to one of claims 1 to 4, **characterised in that** the matrix starting material is a reactive starting material containing cyclic or macrocyclic oligomers of polyester blended with a polymerisation catalyst, and in particular a reactive starting material containing cyclic oligomers of PBT (CPBT) blended with a polymerisation catalyst.

6. Process according to one of claims 1 to 5, **characterised in that** the matrix-supply units are powder scatterers, by means of which the matrix starting material present in powder form is scattered in each case on a layer of a free-lying fibre structure.

7. Process according to one of claims 1 to 6, **characterised in that** a film-like matrix starting material is applied to in each case a free-lying layer of a fibre structure by means of matrix-supply units.

8. Process according to one of claims 1 to 7, **characterised in that** the reactive starting material is polymerised in the continuous press to form a thermoplastic material matrix, in particular to form a PBT plastic matrix.

9. Process according to one of claims 1 to 8, **characterised in that** the fibre-laying device contains one or more pressing stations, in particular impression cylinders, by means of which the multi-layer fibre web is pre-pressed in-line.

10. Process according to one of claims 1 to 9, **characterised in that** the pressing station comprises a pressure roller and counter-pressure roller, which are arranged in pairs, and between which the web-like fibre lay is passed while exerting a pressing process.

11. Process according to claim 10, **characterised in that** the pressing station is part of a fibre-supply unit, wherein via the pressure roller a web-like fibre structure is at the same time supplied, deflected and applied to the fibre web.

12. Process according to one of claims 1 to 11, **characterised in that** the further fibre structures supplied in advance direction of the fibre lay via a fibre-supply unit are applied to the multi-layer fibre web via a pressing station, in particular via a contact roller.

13. Process according to one of claims 1 to 12, **characterised in that** the multi-layer fibre web is coated on one side or both sides with a cover layer in the form of a plastic film or an extruded plastic film after supplying all fibre structures and all matrix starting material and before entry into the continuous press, wherein the cover layer is joined to the plastic matrix of the multi-layer fibre web in the continuous press.

14. Process according to one of claims 1 to 13, **characterised in that** the cover layer is made from a thermoplastic material, preferably from a polyester, such as PET, in particular from a PBT or a PBT plastic alloy.

15. Process according to one of claims 1 to 14, **characterised in that** the multi-layer fibre web present in the form of a material composite is joined intimately and in pore-free manner to form a panel-like plastic material in the continuous press with supply of heat and/or pressure and with polymerisation of the plastic matrix to form a thermoplastic material.

16. Process according to one of claims 1 to 15, **characterised in that** the multi-layer fibre web is passed through a continuous press having several, separately adjustable pressing zones and tempering zones, and the pressing pressures are produced by floating, hydraulically actuated lower pressing plates, which work against an upper rigid press construction.

17. Process according to one of claims 1 to 17, **characterised in that** the pressure in the continuous press is built up by segmented pressing plates with gap distances which can be adjusted with respect to one another.

18. Process according to one of claims 1 to 17, **characterised in that** after a certain number of segmented pressing plates, a line pressure for expelling voids and bubbles from the plastic matrix is produced in each case by means of an impression cylinder.

19. Process according to one of claims 1 to 18, **characterised in that** the multi-layer fibre web is passed through one or more impression cylinders arranged in the continuous press, as a result of which the multi-layer fibre web experiences complete, bubble-free impregnation of the fibre structure by the molten plastic matrix.

20. Device for executing the process according to claim 1, wherein the device contains a fibre-laying device and a continuous press following in-line thereafter, and the fibre-laying device contains several fibre-supply units for in-line supply of web-like fibre structures and one or more matrix-supply units connected between or downstream of the fibre-supply units for supply of a matrix starting material to free-lying layers of the fibre structures, **characterised in that** at least one fibre-supply unit is designed as a cross layer, by means of which a supply obliquely or diagonally in advance direction of the multi-layer fibre web and can be folded with formation of laying edges.

21. Device according to claim 20, **characterised in that** alternatively, a fibre-supply unit for unfolded supply of a web-like fibre structure in advance direction of the fibre web and a subsequent fibre-supply unit with cross layer for supply of a web-like fibre structure obliquely or diagonally to the advance direction of the fibre web, wherein the first and last fibre-supply unit is for unfolded supply of a web-like fibre structure in advance direction of the fibre web.

22. Device according to claim 20 or 21, **characterised in that** in each case a matrix-supply unit is arranged following a fibre-supply unit with cross layer.

23. Device according to claim 22, **characterised in that** the matrix-supply unit is a powder scatterer, by means of which a matrix starting material present in powder form is scattered on free-lying layers of the fibre structure.

24. Device according to claim 22, **characterised in that** the matrix-supply unit is a film-supply unit, by means of which a film-like matrix starting material is applied to in each case free-lying layers of the fibre structure.

25. Device according to one of claims 20 to 24, **characterised in that** the fibre-laying device contains one or more pressing stations, in particular impression cylinders, by means of which the multi-layer fibre web is pre-pressed in-line.

26. Device according to one of claims 20 to 25, **characterised in that** the pressing station comprises a pressure roller and counter-pressure roller, which are arranged in pairs, and between which the multi-layer fibre web is passed while exerting a pressing pressure.

27. Device according to one of claims 20 to 26, **characterised in that** the pressing station is part of a fibre-supply unit, and the pressure roller serves at the same time for unfolded supply and deflection of a web-like fibre structure in advance direction.

28. Device according to one of claims 20 to 27, **characterised in that** the continuous press contains several, separately adjustable pressing zones and tempering zones, and the pressing zones contain floating, hydraulically actuated lower pressing plates, which work against an upper rigid press construction, to exert the pressing pressure.

29. Device according to one of claims 20 to 28, **characterised in that** the pressing zones have segmented pressing plates with gap distances which can be adjusted with respect to one another.

30. Device according to one of claims 20 to 29, **characterised in that** after a certain number of segmented pressing plates, in each case one pressing station, in particular an impression cylinder, is arranged for producing a line pressure.

## Revendications

1. Procédé pour la préparation en continu d'un matériau thermoplastique en plaque, renforcé par des structures fibreuses planes, dans ce procédé, une première structure fibreuse en bande est amenée dans un dispositif de pose de fibres, à l'aide d'unités d'alimentation de fibres en ligne, une ou plusieurs autres structures fibreuses en bande sont agencées sur la première structure fibreuse, à l'aide d'une ou de plusieurs unités d'alimentation de matrice, précédant ou suivant les unités d'alimentation de fibres, un matériau de départ de matrice est amené sur les couches libres des structures fibreuses, et la bande fibreuse multicouche, sortant de l'unité de pose de fibres, revêtue une ou plusieurs fois de couches intermédiaires en le matériau de départ de matrice, est amenée dans une presse de passage, dans laquelle le matériau de départ de matrice est converti par la chaleur et/ou action de la pression, en un liquide faiblement visqueux et la bande fibreuse multicouche est compressée avec imprégnation de la structure fibreuse, en un matériau plastique en plaque,
**caractérisé en ce qu'**au moins une unité d'alimentation des fibres est formée comme un dispositif de pose croisée, à l'aide duquel une structure fibreuse en bande alimentée en oblique en en diagonale par rapport à la direction de défilement de la bande de fibres, est appliquée par pose régulière ce celle-ci le long du bord latéral de la bande fibreuse, sur la bande fibreuse.

2. Procédé selon la revendication 1, **caractérisé en ce que** la structure fibreuse en bande est amenée et inclinée d'un angle de 45° par rapport à la direction de défilement de la bande de fibres.

3. Procédé selon la revendication 1 ou 2, **caractérisé en ce que** de manière variable, une structure fibreuse en bande est amenée non pliée dans la direction de défilement de la bande de fibres et une structure fibreuse en bande suivante est amenée de manière croisée en oblique ou en diagonale par rapport à la direction de défilement de la bande de fibres, à l'aide d'un dispositif de pose croisée, où la première structure fibreuse et la structure fibreuse alimentée en dernier sont amenées de préférence, non pliées en direction de défilement de la bande de fibres.

4. Procédé selon l'une des revendications 1 à 3, **caractérisé en ce que** les unités d'alimentation de matrice sont agencées chaque fois à la suite d'une unité d'alimentation de fibres à l'aide du dispositif de pose croisée.

5. Procédé selon l'une des revendications 1 à 4, **caractérisé en ce que** le matériau de départ de matrice est un matériau de départ réactif contenant des oligomères cycliques ou macrocycliques d'un polyester, mélangés à un catalyseur de polymérisation, et en particulier un matériau de départ réactif contenant des oligomères cycliques du PBT (CPBT) mélangés à un catalyseur de polymérisation.

6. Procédé selon l'une des revendications 1 à 5, **caractérisé en ce que** les unités d'alimentation de matrice sont des saupoudreurs, à l'aide desquels le matériau de départ de matrice, sous forme pulvérulente, est distribué chaque fois sur une couche d'une structure fibreuse libre.

7. Procédé selon l'une des revendications 1 à 6, **caractérisé en ce qu'**à l'aide des unités d'alimentation de matrice, un matériau de départ de matrice, sous forme de feuille, est appliqué sur une couche chaque fois libre d'une structure fibreuse.

8. Procédé selon l'une des revendications 1 à 7, **caractérisé en ce que** le matériau de départ réactif est polymérisé dans la presse de passage, en une matrice thermoplastique, en particulier en une matrice plastique de PBT.

9. Procédé selon l'une des revendications 1 à 8, **caractérisé en ce que** le dispositif de pose de fibres contient un ou plusieurs postes de pressage, en particulier des presseurs, à l'aide desquels la bande de fibres multicouche est pré-pressée en ligne.

10. Procédé selon l'une des revendications 1 à 9, **caractérisé en ce que** le poste de pressage contient un rouleau de pression et un contre-rouleau, lesquels sont agencés par paire, et entre lesquels la pose des bandes de fibres est réalisée sous un processus de pressage.

11. Procédé selon la revendication 10, **caractérisé en ce que** le poste de pressage est partiellement une unité d'alimentation de fibres, où par le rouleau de pression, une structure fibreuse en bande est simultanément amenée, orientée et appliquée sur la bande de fibres.

12. Procédé selon l'une des revendications 1 à 11, **caractérisé en ce que** les autres structures fibreuses amenées par une unité d'alimentation de fibres dans la direction de défilement de la bande de fibres, sont appliquées par un poste de pressage, en particulier par un rouleau de pression, sur la bande de fibres multicouche.

13. Procédé selon l'une des revendications 1 à 12, **caractérisé en ce que** la bande de fibres multicouche est revêtue après alimentation de toutes les structures fibreuses et de tout le matériau de départ de matrice et avant l'entrée dans la presse de passage, sur une ou les deux faces, d'une couche de couverture sous forme d'une feuille plastique ou d'un film plastique extrudé, où la couche de couverture se lie à la matrice plastique de la bande fibreuse multicouche dans la presse de passage.

14. Procédé selon l'une des revendications 1 à 13, **caractérisé en ce que** la couche de couverture est en un thermoplastique, de préférence en un polyester, comme le PET, en particulier en un PBT ou un alliage plastique de PBT.

15. Procédé selon l'une des revendications 1 à 14, **caractérisé en ce que** la bande de fibres multicouche présente sous forme de matériau composite est reliée dans la presse de passage, par alimentation de chaleur et/ou de pression et par polymérisation de la matrice plastique en un thermoplastique, de manière intime et sans pore, en un matériau plastique en plaque.

16. Procédé selon l'une des revendications 1 à 15, **caractérisé en ce que** la bande de fibres multicouche est conduite dans une presse de passage avec plusieurs zones de pressage et zones de mise à température, ajustables séparément, et les pression de la presse est produite par des plaques de pressage oscillantes, à fonctionnement hydraulique inférieur, qui travaillent contre une construction supérieure rigide de pressage.

17. Procédé selon l'une des revendications 1 à 16, **caractérisé en ce que** la pression dans la presse de passage est élaborée par des plaques de pression segmentées avec distance de séparation ajustable.

18. Procédé selon l'une des revendications 1 à 17, **caractérisé en ce qu'**après un certain nombre de plaques de pression segmentées, une pression linéaire est produite chaque fois à l'aide d'un presseur, pour chasser les poches et bulles de la matrice plastique.

19. Procédé selon l'une des revendications 1 à 18, **caractérisé en ce que** la bande de fibres multicouche est conduite dans un ou plusieurs presseurs agencés dans la presse de passage, ce par quoi la bande de fibres multicouche subit une imprégnation complète, sans bulle de la structure fibreuse avec la matrice plastique fondue.

20. Appareil pour réaliser le procédé de la revendication 1, où l'appareil comprend un dispositif de pose de fibres et une presse de passage suivante en ligne, et où le dispositif de pose de fibres comprend plusieurs unités d'alimentation des fibres pour l'alimentation en ligne des structures fibreuses en bande, ainsi qu'une ou plusieurs unités d'alimentation de matrice intercalées entre ou suivant les unités d'alimentation des fibres, pour l'amenée d'un matériau de départ de matrice sur les couches libres de structure fibreuses,
**caractérisé en ce qu'**au moins un dispositif d'alimentation des fibres est formé comme un dispositif de pose croisée, à l'aide duquel une bande de fibres peut être amenée en oblique ou en diagonale par rapport à la direction de défilement de la bande de fibres multicouche et peut être orientée pour former des bords de pose.

21. Appareil selon la revendication 20, **caractérisé en ce que** de manière variable, il comprend une unité d'alimentation des fibres pour l'alimentation non pliée d'une structure fibreuse en bande dans la direction de défilement de la bande de fibres et une unité d'alimentation des fibres suivantes avec dispositif de pose croisée pour l'alimentation d'une structure fibreuse en bande en oblique ou en diagonale par rapport à la direction de défilement de la bande de fibres, où la première et la dernière unité d'alimentation de fibres est pour l'alimentation non pliée d'une structure fibreuse en bande en direction de défilement de la bande de fibres.

22. Appareil selon la revendication 20 ou 21, **caractérisé en ce qu'**à la suite d'une unité d'alimentation de fibres avec dispositif de pose croisée, est agencée chaque fois une unité d'alimentation de matrice.

23. Appareil selon la revendication 22, **caractérisé en ce que** l'unité d'alimentation de matrice est un saupoudreur, à l'aide duquel un matériau de départ de matrice, sous forme pulvérulente, est distribué sur les couches libres de structure fibreuse.

24. Appareil selon la revendication 22, **caractérisé en ce que** l'unité d'alimentation de matrice est une unité d'alimentation de feuille, à l'aide de laquelle un matériau de départ de matrice sous forme de feuille est appliqué sur les couches chaque fois libres de structure fibreuse.

25. Appareil selon l'une des revendications 20 à 24, **caractérisé en ce que** le dispositif de pose de fibres comprend un ou plusieurs postes de pressage, en particulier des presseurs, à l'aide desquels la bande de fibres multicouche est pressée en ligne.

26. Appareil selon l'une des revendications 20 à 25, **caractérisé en ce que** le poste de pressage se compose d'un rouleau de pression et d'un contre-rouleau, lesquels sont agencés par paire et entre lesquels la bande de fibres multicouche est passée avec mise en oeuvre d'une pression.

27. Appareil selon l'une des revendications 20 à 26, **caractérisé en ce que** le poste de pressage est partiellement une unité d'alimentation de fibres, où le rouleau de pression sert simultanément à l'alimentation non pliée et à l'orientation d'une une structure fibreuse en bande dans la direction de défilement.

28. Appareil selon l'une des revendications 20 à 27, **caractérisé en ce que** la presse de passage contient plusieurs zones de pressage et zones de mise à température, ajustables séparément, et les zones de pressage pour exercer la pression de la presse contiennent des plaques de pressage oscillantes, à fonctionnement hydraulique inférieur, qui travaillent contre une construction supérieure rigide de pressage.

29. Appareil selon l'une des revendications 20 à 28, **caractérisé en ce que** les zones de pressions présentent des plaques de pression segmentées avec distance de séparation ajustable.

30. Appareil selon l'une des revendications 20 à 29, **caractérisé en ce qu'**après un certain nombre de plaques de pression segmentées, chaque fois un poste de pression, en particulier un presseur est agencé pour la production d'une pression linéaire.
